(19) Europäisches Patentamt
European Patent Office
Office européen des brevets

(11) **EP 1 698 446 B1**

(12) **EUROPEAN PATENT SPECIFICATION**

(45) Date of publication and mention
of the grant of the patent:
**17.09.2014 Bulletin 2014/38**

(21) Application number: **04807423.1**

(22) Date of filing: **21.12.2004**

(51) Int Cl.:
*B29C 65/16* (2006.01)    *F16L 13/02* (2006.01)
*F16L 33/34* (2006.01)    *F16L 47/02* (2006.01)
*C08L 53/02* (2006.01)    *B29C 65/56* (2006.01)
*B29L 23/00* (2006.01)

(86) International application number:
**PCT/JP2004/019066**

(87) International publication number:
**WO 2005/063469 (14.07.2005 Gazette 2005/28)**

(54) **METHOD FOR MANUFACTURING TUBULAR ARTICLE**

VERFAHREN ZUR HERSTELLUNG EINES RÖHRENFÖRMIGEN ARTIKELS

PROCEDE DE FABRICATION D'UN ARTICLE TUBULAIRE

(84) Designated Contracting States:
**DE ES FR GB IT**

(30) Priority: **26.12.2003 JP 2003434859**

(43) Date of publication of application:
**06.09.2006 Bulletin 2006/36**

(73) Proprietor: **Kuraray Co., Ltd.,
Okayama 710-8622 (JP)**

(72) Inventors:
• **ZENTO, Toshiyuki;
i, Ibaraki 3050841; (JP)**
• **FUKUHARA, Naoto;
i, Ibaraki 3050841; (JP)**
• **FUKUDA, Motohiro;
i, Ibaraki 3050841; (JP)**

(74) Representative: **Copsey, Timothy Graham et al
Kilburn & Strode LLP
20 Red Lion Street
London WC1R 4PJ (GB)**

(56) References cited:
JP-A- 2001 071 384    JP-A- 2002 526 261
JP-A- 2003 181 931    JP-A- 2004 090 628
JP-A- 2004 114 456    JP-B2- 2 511 643
JP-B2- 5 042 336    US-A1- 2003 138 582

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

This invention relates to a method for the production of a tubular article, characterized by laser welding a tubular body comprised of a flexible thermoplastic resin composition to a tubular body comprised of a resin composition of higher hardness.

Background Art

The polyolefin type resins such as polyethylene and polypropylene are copiously used in household electrical appliances such as television sets and video players, automotive parts such as bumpers, beer containers, and packing bands because they have high heat-resistant temperatures and excel in stiffness, impact resistance, and gas permeability. There are times when the polyolefin type resins possessing high stiffness are mixed with a thermoplastic block copolymer elastomer in order to give flexibility. The thermoplastic resin compositions consequently obtained are used copiously in a wide range of applications because they can be manufactured into extrusion molded articles such as sheets, films, tubes, and hoses and injection, molded articles such as goggles, flippers, various grips, and stationery. While these resins possess peculiar properties of their own, various composites which are formed by adhesively combining a plurality of different kinds of resin into a one-piece member have been developed with the object of increasing applications, improving products, and the like.

Generally, there are times when two molded articles made of such thermoplastic resin composition are mutually joined by adhesion or a thermoplastic resin composition and other resin are joined by adhesion in manufacturing a product composed of a plurality of members. In the step of this adhesion, a method which consists in pasting together the opposed molded articles by applying a solvent adhesive resulting from dissolving in an organic solvent, hot-melt adhesive, and the like to thermoplastic block copolymer elastomer or a method which consists in pasting the opposed molded articles through the medium of a hot-melt adhesive, and the like is carried out. The former method, however, is at a disadvantage in entailing troublesome handling of the adhesive agent and possibly suffering the excess adhesive agent to ooze out and defile the vicinity of adhesion part. It further poses the problem that a long time is taken till the adhesive force is heightened. Meanwhile, the latter method with the hot-melt adhesive is at a disadvantage in requiring the adhesive agent to be heated prior to the work of adhesion and possibly inducing the blocking of a nozzle with increased viscosity in the case of heating the adhesive agent for a long time. Further, the product adhered has no very high adhesion properties itself.

For the sake of effecting adhesion at points allowing no easy application of an adhesive agent, a method for mutually welding molded articles thermally such as, for example, a method of ultrasonic welding, is available. This is a method for effecting the welding by directly applying to the relevant interface an oscillator conformed to the shape of a adhesion part, oscillating the adhesion interface, and inducing emission of frictional heat. This method produces high adhesive force and, in the case of adhesion of flat surfaces, gives a comparatively beautiful finish. In the case of mutual adhesion of soft materials, however, this method is possibly at a disadvantage in suffering the applied energy to be absorbed by the materials of the opposed articles and consequently affording no adhesion or inferior adhesion. Particularly in the case of adhesion of molded articles having curved surf aces, the adhesion poses the problem that the molded articles have their surfaces melt so much, depending on the condition of touch of a horn, as to impair outward appearance and occur dispersion of adhesion properties. Besides, the oscillation of the adhesion interface entails such a critical problem as giving rise to shavings. There is fear the fluid contaminated with impurities in the case of using the adhered product for transporting the fluid.

Themethod of high frequency welding is also available as another method of adhesion. This is a method which consists in nipping a material between a metal mold and a base material, imparting a high frequency wave to the material itself, and consequently heating them. Since the thermoplastic resin composition containing a polyolefin type resin has a very small dielectric loss, the generation of heat aimed at is attained with difficulty and the metal mold is required to possess a structure fit for heating. A method which consists in adding an ethylene·vinyl acetate copolymer or its like for the purpose of securing adhesion properties is available. There are times when this method is unusable for an ordinary application because the addition of an ethylene-vinyl acetate copolymer to the thermoplastic resin composition results in markedly impairing transparency and increasing the agglutinate of the material. Further, since this method necessitates a pressing step during the course of adhesion, the pressure applied has the possibility of impairing the outward appearance as by deforming the molded article or forcing out the molten portion thereof.

A method for welding by irradiating an infrared laser is available as well. This is the method for adhesion which is accomplished by placing a molded article manifesting high perviousness to a laser beam on top of a molded article manifesting high absorbency to a laser beam, irradiating a laser from the side pervious to the laser beam, and causing the overlapping surfaces of the molded articles to generate heat (refer to Japanese Laid-Open Patent Publication No.

2001-71384).

Further, a method for adhesion by interposing a thin infrared ray-absorbing transparent film between two transparent resin members and radiating a laser beam to them was proposed (refer to Japanese Laid-Open Patent Publication No. 2003-181931).

Besides, a method which consists in providing the molded articles in their parts of adhesion with a radiation absorbent possessing an absorption band conforming to the laser wavelength in the adhesive part of the molded articles and irradiating a laser to them (JP-T-2002-526261). One embodiment of this method discloses a sheet of hard resin or fabric and performs a pressing step subsequent to adhesion of molded articles resulting from placing flat sheets one on top of another.

US2003/0138582 discloses a medical device comprising a first substrate, a second substrate and a powder coated tie layer between the first and second substrates resulting in a multilayer construction.

Disclosure of the Invention

The polyolefin type resins excel in heat-resistant temperature, stiffness, impact resistance, transparency, and the like and, therefore, has been enjoying an enormous demand which emanates from applications directed toward monitoring the contamination with impurities by visual observation or by means an inspecting device such as a laser, applications directed toward necessitating transparency in order to monitor the contamination of the fluid with air bubbles, applications directed toward manufacturing tubes which allow observation of the internal defilement thereof and permit judgment of the time for replacing thereof. Since they have high degrees of hardness, however, they allow no easy adhesion to other resin while maintaining a high airtightness and particularly incur difficulty in securing transparency and adhesiveness at the same time. The method which is disclosed in the aforementioned Japanese Laid-Open Patent Publication No. 2001-71384, for example, needs to incorporate such an auxiliary substance as carbon black into the material and consequently entails the possibility of staining the connected parts in black and opaque in the regions of visible light of transparency. Thus, they are unsuitable for applications which require molded articles to possess transparency and visibility.

The method disclosed in the Japanese Laid-Open Patent Publication No. 2003-181931 is suitable for mutual adhesion of flat surface shapes. In the case of adhesion for curved surfaces, rhombic shapes, tubular shapes, and the like, however, the step of setting the film in the interface of adhesion proves to be troublesome and complicates the operation when mass producing.

The method disclosed in JP-T-2002-526261 requires a pressing step subsequent to adhesion and renders adhesion extremely difficult when the molded articles have an indefinite shape or a tubular shape.

In such situation, the objection of this invention is to provide a method for producing a lengthy tubular article by adhering conveniently tubular bodies comprised of a resin containing a polyolefin.

The object of this invention is further to provide : a method for adhering easily a tubular article containing tubular bodies comprised of a resin containing a polyolefin while retaining transparency of the tubular bodies even when the tubular bodies have curved surfaces.

The present inventors, as result of devoting ourselves to review in order , have discovered that when a tubular article is a product of connection of a tubular body (a) comprised of a thermoplastic resin composition containing a styrene type elastomer and a polyolefin type resin and a tubular body (b) composed of a polyolefin type resin, the two tubular bodies can be welded with maintaining their transparency and enabled to produce the tubular article excelling in adhesive strength by inserting them, interposing an absorbent for laser beam therebetween, and irradiating a laser thereto and the tubular article excelling in adhesive strength can be produced. Consequently, this invention has been perfected.

Particularly by adjusting the diameters of the parts of insertion of the two tubular bodies within a specific range, it is made possible to produce excellent adhesive force and attain tight connection of the surfaces of adhesion without requiring a pressing step. Further, by varying the ratio of combination of the styrene type elastomer and the polyolefin type resin in the tubular body (a), it is made possible to secure flexibility conforming to the purpose of use and the solid state properties of product to be required while retaining the excellent adhesive strength.

In accordance with the method of this invention for the production of a tubular article, the tubular article veritably excelling in adhesive strength can be produced by inserting a tubular body (a) possessing a layer comprised of a thermoplastic resin composition containing a styrene type elastomer and a polyolefin type resin into a tubular body (b) comprised of a polyolefin type resin and subjecting the connected parts thereof to laser welding.

In accordance with this invention, even molded articles comprise curved surfaces can be adhered in high adhesive strength without impairing the outward appearance by adjusting the inside diameters and/or outside diameters of the parts of insertion of the tubular body (a) and the tubular body (b) within a specific range. Further, since the laser beam does not need to be irradiated to any excess, the deformation which possibly occurs in the molded article during the course of processing can be prevented.

The tubular article according to this invention is the product which connects a flexible tubular body (a) and a hard tubular body (b) and, therefore, can be used in a wide range of applications for toys, articles for daily use, food containers, sundry articles, light electrical appliances, automotive parts, utensils for medical treatment, and industrial parts, or the like which need to be composed of resins having different properties. As concrete examples of applications, the tubular article adopted for transporting a fluid proves to be particularly advantageous for an application intended to monitor the contamination of the fluid with impurities by visual inspection or by means of an inspecting device such as laser inspection, for a application requiring transparency in order to monitor the inclusion of air bubbles entrained by a fluid, and for an application in a tube which can be observed the internal defilement thereof and judged of the time for necessary replacement thereof.

Brief Description of the Drawings

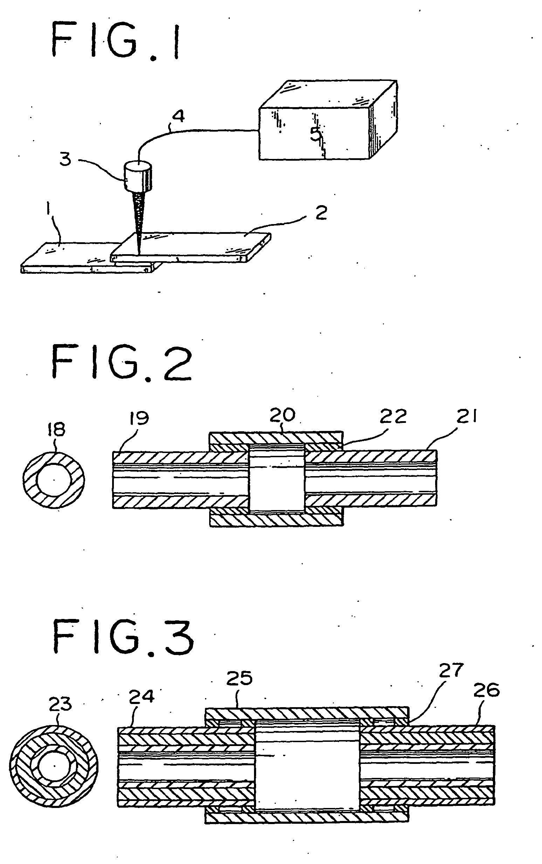

Fig. 1 is a drawing illustrating a semiconductor laser irradiating device used in Examples and Comparative examples. Fig. 2 is a drawing illustrating the tubular bodies adhered mutually and a method for joining thereof in Examples 1 - 3 and Comparative Example 1. In Fig. 2, 18 stands for a monolayer tubular body (cross section), 19 for a monolayer tubular body (substrate A), 20 for a monolayer tubular body (substrate B), 21 for a monolayer tubular body (substrate C), and 22 for an absorbent.

Fig. 3 is a drawing illustrating the tubular bodies adhered mutually and a method for joining thereof in Example 4. In Fig. 3, 23 stands for a three-ply multilayer tubular body (substrate A: cross section), 24 for a three-ply multilayer tubular body (substrate A), 25 for a monolayer tubular body (substrate B), 26 for a three-ply multilayer tubular body (substrate C), and 27 for an absorbent.

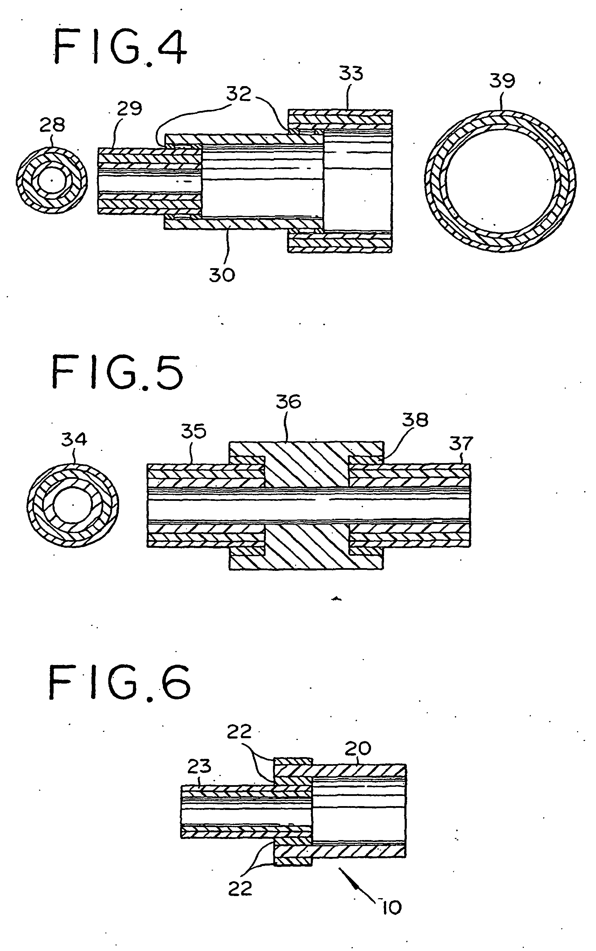

Fig. 4 is a drawing illustrating the tubular bodies adhered mutually and a method for joining thereof in Examples 5 and 6 and Comparative Example 2. In Fig. 4, 28 stands for a three-ply multilayer tubular body (substrate A: cross section), 29 for a three-ply multilayer tubular body (substrate A), 30 for a monolayer tubular body (substrate B), 32 for an absorbent, 33 for a three-ply multilayer tubular body (substrate C), and 39 for a three-ply multilayer tubular body (substrate C: cross section).

Fig. 5 is a drawing illustrating the tubular bodies adhered mutually and a method for joining thereof in Examples 7 - 9. In Fig. 5, 34 stands for a three-ply multilayer tubular body (substrate A: cross section), 35 for a three-ply multilayer tubular body (substrate A), 36 for denotes a monolayer tubular body (substrate B: connector), 37 for a three-ply multilayer tubular body (substrate C), and 38 for an absorbent.

Fig. 6 is a drawing illustrating in type section a connected part obtained when a tubular body and a tubular body are connected by insertion. In Fig. 6, 10 stands for a connected part, 20 for a monolayer tubular body (substrate B), 22 for an absorbent, and 23 for a three-ply multilayer tubular body (substrate A).

Best Mode of Embodying the Invention

The first aspect of this invention is directed toward a method for the production of a tubular article resulting from joining by insertion a tubular body (a) possessed of a layer comprised of a thermoplastic resin composition (A) containing a styrene type elastomer and a polyolefin type resin and a tubular body (b) comprised of a thermoplastic resin composition (B) containing a polyolefin, characterized by comprising:

a step of interposing an absorbent having an absorption wavelength of 700 - 2,500 nm on the tubular body (a) and/or the tubular body (b) in the connected part of the tubular body (a) and the tubular body (b) so related as to have a ratio of the outside diameter of a thin tube and the inside diameter of a thick tube (outside diameter of thin tube/inside diameter of thick tube = X) in the range of $1 < X < 1.25$,
a step of connecting the tubular body (a) and the tubular body (b) by mutual insertion, and
a step of causing the connected part to adhere by irradiation with a laser beam, and
satisfying the condition that the storage elastic modulus of the tubular body (a) is in the range of $1.0 \times 10^7$ - $6.7 \times 10^8$ Pa, the storage elastic modulus of the tubular body (b) is in the range of $2 \times 10^7$ - $9 \times 10^8$ Pa, and the storage elastic modulus of the tubular body (b) is higher than that of the tubular body (a).

This invention is characterized by connecting by insertion the tubular body (a) and the tubular body (b) so related prior to the mutual insertion thereof as to have a ratio of the outside diameter of a thin tube and the inside diameter of a thick tube (outside diameter of thin tube/inside diameter of thick tube = X) in the range of $1 < X < 1.25$, preferably in the range of $1.001 < X < 1.2$, more preferably in the range of $1.01 < X < 1.15$, and particularly preferably in the range of $1.02 < X < 1.10$ and subjecting the connected tubular bodies to laser welding through the medium of the absorbent thereby enabling the tubular bodies each possessing a curved surface to be jointed uniformly in tight adhesion and producing a tubular article. The adhesion by the laser welding consists in superposing and jointing objects for adhesion mutually, irradiating them with a laser beam through the medium of an absorbent for the laser beam, and causing the objects for adhesion to adhere with a strength exceeding the physical pressure of contact. In this invention, it has been found that when two tubular bodies are connected by having one of them inserted into the other, the adhesive strength after the laser welding increases in proportion as the pressure on the adhesion interface increases and it has been ascertained by evaluating the ease of insertion and the adhesion property that the inserting property and the adhesion property by laser welding excel when the outside diameter of a thin tube/the inside diameter of a thick tube is in the aforementioned range. Incidentally, the words "thin tube" and "thick tube" as used in this invention mean that when the two tubular bodies are connected by insertion, the tubular body placing inside is a thin tube and the tubular body placing outside is a thick tube without depending upon their inside diameter and outside diameter. If the ratio of the outside diameter of a thin tube/the inside diameter of a thick tube is not more than 1, it will give rise to a gap in the connected part between the thick tube and the thin tube and render difficult uniform tight adhesion of the tubes by laser welding in spite of facilitating insertion. Conversely, if the ratio of the outside diameter of a thin tube/the inside diameter of a thick tube is not less than 1.25, it will possibly render difficult the connection by insertion of the thin tube and the thick tube in spite of adding to the pressure on the adhesion interface and enabling the laser welding to effect adhesion excelling in strength. When X is not less than 1.25, it possibly renders difficult the' insertion of the tubular bodies.

For this invention, it is irrelevant whether either of the tubular body (a) and the tubular body (b) is a thin tube or a thick tube. It is, therefore, permissible to use for the connection a hard tubular body (b) as a thin tube and a soft tubular body (a) as a thick tube. When the tubular body (b) is in a deformed tubular body having different inside diameters and outside diameters at the both ends thereof, it is permissible to have one tubular body (a) inserted as a thin tube into the inside diameter of the tubular body (b) and have the tubular body (b) connected to the inside diameter of another tubular body (a) as a thick tube. The shapes of cross sections of the tubular bodies (a) and (b) may be in a circular shape or an elliptic shape.

(1) Tubular body (a)

The styrene type elastomer to be used in the aforementioned thermoplastic resin composition (A) is preferred to be a block copolymer which is comprised of an aromatic vinyl polymer block (I) and a conjugated diene type polymer block or a hydrogenated block thereof (II).

The aromatic vinyl polymer block (I) is comprised of aromatic vinyl monomer units. As concrete examples of this monomer, styrene, $\alpha$-methyl styrene, 4-methyl styrene, 4-propyl styrene, 4-chclohexyl styrene, 4-dodecyl styrene, and the like may be cited. Among these monomers, styrene or $\alpha$-methyl styrene is preferable with respect to a cost. Thus, polystyrene or poly-$\alpha$-methyl styrene is suitably used for the aforementioned aromatic vinyl polymer block.

The content of the aromatic vinyl monomer unit in the aforementioned styrene type elastomer is preferably in the range of 10 - 40 % by weight and more preferably in the range of 15 - 30 % by weight. If the content of the aromatic vinyl monomer unit is less than 10 % by weight, it will possibly result in lowering the mechanical strength of the styrene type elastomer. Conversely, if the content of the aromatic vinyl monomer is more than 40 % by weight, it will possibly result in adding to the melting viscosity of the styrene type elastomer, rendering difficult uniform mixture thereof with the polyolefin type resin, and imposing a restriction on the molding process. Though the number average molecular weight of the aromatic vinyl polymer block (I) does not need to be particularly restricted, it is generally preferred to be in the range of 2,500 - 20, 000. Within this range, the resultant styrene type elastomer is superior in flexibility and moldability.

The aforementioned conjugated diene type polymer block or the hydrogenated polymer block thereof (II) is preferred to be at least one kind of polymer block which is selected from the group consisting of a polyisoprene block, an isoprene/butadiene copolymer block, and a polybutadiene block. More preferably, it is (1) polyisoprene having a content of 1,2-bond unit and 3,4-bond unit in the range of 10 - 75 mol % and having hydrogenated not less than 70 % of the carbon-carbon double bonds thereof, (2) an isoprene-butadiene copolymer containing isoprene/butadiene at a ratio in the range of 5/95 - 95/5 (mass ratio), having a content of 1,2-bond unit and 3,4-bond unit in the range of 20 - 85 mol %, and having hydrogenated not less than 70% of the carbon-carbon double bonds thereof, or (3) polybutadiene having a 1,2-bond unit content of not less than 45 mol % and having hydrogenated not less than 70 % of the carbon-carbon double bonds thereof. The reason for this preference is that the resultant styrene type elastomer manifests enhanced compatibility with the polyolefin type resin and improves the transparency of the resultant combination. Incidentally, though the number average molecular weight of the conjugated diene type polymer block and the hydrogenated polymer block do not need to be particularly restricted, it is preferred to be in the range of 10,000 - 200,000.

The styrene type elastomer to be used in this invention is preferred to be such that the aromatic vinyl polymer block is comprised of polystyrene or poly-$\alpha$-methyl styrene and the conjugated diene type polymer block is comprised of polyisoprene, isoprene/butadiene copolymer, polybutadiene, or the hydrogenated product thereof. The reason for,this preference is that the resultant styrene type elastomer excels in flexibility and secures transparency as well.

Incidentally, the mode of linkage of the aromatic vinyl polymer block and the conjugated diene polymer block does not need to be particularly restricted. The linkage may be in a linear form, a branched form, or a form of arbitrary combination thereof. The molecular structure of the styrene type elastomer may be either of the block copolymers represented by I - (II - I) n and (I - II)n, wherein (I) stands for the aromatic vinyl polymer block and (II) for the conjugated diene type polymer block or the hydrogenated polymer block thereof, and n for a natural number. Further, as the styrene type elastomer, one kind of the aforementioned block copolymer may be used singly or two or more kinds thereof may be used in combination. It is further permissible to use two or more kinds of such block copolymers having different molecular structures as are obtained by mixing block copolymers of triblock type and diblock type, for example. Incidentally, the number average molecular weight of the styrene type elastomer to be used in this invention is preferred to be in the range of 30,000 - 300,000.

As concrete examples of the polyolefin type resin to be used for the tubular body (a) of this invention, polyethylene resins such as high density polyethylene, low density polyethylene, linear low density polyethylene, and high pressure ethylene-$\alpha$-olefin copolymer, homopolypropylene, random copolymer of ethylene and propylene, an ethylene block-containing block type polypropylene resin, and cyclic polyolefins may be cited. Among these polyolefin type resins enumerated above, polypropylene resins and cyclic polyolefins is particularly suitable. The aforementioned polyolefin type resins may be used either singly or in the form of a combination of two or more members. The melting viscosity of the polyolefin type resin to be used in this invention is preferred to be such that the melt flow rate (MFR) determined at 230°C under a load of 2160 g in accordance with ASTM-1238 is preferably in the range of 0.1 - 500 and more preferably in the range of 2 - 200. The reason for specifying this range for the melt flow rate is that the melt flow rate in this range enables the resultant polyolefin type resin to excel in moldability.

The aforementioned thermoplastic resin composition (A) contains the aforementioned styrene type elastomer and the aforementioned polyolefin type resin. The content of the styrene type elastomer in the composition is in the range of 5 - 85 % by weight and preferably in the range of 20 - 80 % by weight. If the content of the styrene type elastomer is more than 85 % by weight, it will possibly result in inducing such anisotropy of material as variation in moldability, agglutination, and hardness between the longitudinal direction and the lateral direction. Conversely, if the content is less than 5 % by weight, it will possibly result in lowering the molecular weight of polypropylene on radiation exposure in applications for foodstuffs, medical treatment, or the like with the object of bacteria elimination or sterilization and thereby degrading the solid state properties of material. Incidentally, the preferred amount of the polyolefin type resin to be incorporated in the composition (A) is in the range of 15 - 95 % by weight.

Further, the aforementioned thermoplastic resin composition (A) may contain therein a process oil within a range in which the characteristic properties thereof are not impaired. The process oil so contained is enabled to impart flexibility to the tubular body (a). As the process oil which can be incorporated, any of the paraffin type, naphthene type, and aroma type process oils, etc. and mixtures thereof are available. Among these process oils, the paraffin type process oils are particularly advantageously used.

Further, the aforementioned thermoplastic resin composition (A) can be, if necessary, to incorporate therein varying kinds of other additives within a range in which the transparency thereof is not impaired. As concrete examples of the additives, inorganic fillers, lubricants, various kinds of stabilizer, antiblocking agents, weather resistance enhancers, and processing aids may be cited.

The method for preparing the aforementioned thermoplastic resin composition (A) does not need to be particularly restricted. The preparation can be accomplished by mixing the relevant components by any of the publicly known methods. For example, the preparation is attained by uniformly mixing the relevant components by using a kneading machine such as a uniaxial extruder, a biaxial extruder, a kneader, a Bambury mixer, or a roll.

In this invention, the tubular body (a) possesses a layer which is comprised of the aforementioned thermoplastic resin composition (A) containing a styrene type elastomer and a polyolefin type resin. The tubular body (a) to be used in this invention may be a monolayer structure of the layer comprised of the aforementioned thermoplastic resin composition (A) or a laminated body of two or more layers including the above-mentioned layer. In this case, the above-mentioned layer may be contained in any of the component layers of the laminated body. Thus, it may be any of the internal layer, intermediate layer, and outer layer, no matter whether the tubular body (a) may be a thin tube or a thick tube. The layer comprised of the thermoplastic resin composition (A) abounds in elasticity owing to the aforementioned structure and, therefore, manifests flexibility copiously in the connected part and, as a result, possesses the ability to facilitate the connection thereof to the tubular body (b) by insertion and exalt the adhesive strength due to the laser welding.

Incidentally, since the facility of insertion of the tubular body and the adhesive strength during the course of the laser welding are matters of important consideration for this invention, the layer comprised of the aforementioned thermoplastic resin composition (A) does not need to be superposed wholly on the tubular body (a). In such case, the layer comprised of the aforementioned composition (A) is only required to be contained in any of the component layers of the laminated body which comprises the connected part to the tubular body (b) by insertion. Incidentally, since the layer comprised of the aforementioned composition (A) contains the polyolefin type resin and therefore excels in affinity with the tubular body (b) which similarly contains the polyolefin type resin, it is preferred to comprise a layer destined to contact with the tubular body (b).

The storage elastic modulus of the aforementioned tubular body (a) is in the range of $1.0 \times 10^7$ - $6.7 \times 10^8$ Pa and preferably in the range of $1.0 \times 10^7$ - $3.3 \times 10^8$ Pa. If it is less than $1.0 \times 10^7$ Pa, it will possibly deprive the tubular body (a) of the stiffness inherent in a tube and degrade the handling property. Conversely, if it is more than $6.7 \times 10^8$ Pa, it will possibly add to hardness and lower flexibility for a tube. As a result, it proves to be disadvantageous. Incidentally, the term "storage elastic modulus" as used in this specification refers to the value which is determined by the method described in the example cited herein below The storage elastic modulus is adopted as the standard of evaluation because it permits acquisition of a correlation with the flexibility of a tube. The aforementioned storage elastic modulus prefers that the connected part at least with the tubular body (b) fulfills the aforementioned condition.

Incidentally, in the tubular body, the displacement $u_1$ in the radial direction on the inner periphery is indicated by the following formula (1) when only the internal pressure is acting under the external pressure ($p_2 = 0$),

$u_1 = p_1 \times r_1/E/\{(r_2^2 + r_1^2)/(r_2^2 - r_1^2) + 1/m\} \cdots$ (1) wherein $u_1$: displacement (m) in the radial direction on the inner periphery, $p_1$: pressure (Pa) acting on the inner periphery, $r_1$: radius (m) of the inner periphery, $r_2$: radius (m) of the outer periphery, m: inverse of Poisson's ratio, and E: longitudinal elastic coefficient (Pa).

Since the displacement $u_1$ in the radial direction is in inverse proportion to the longitudinal elastic coefficient E as shown in the formula (1), the value of $u_1$ decreases when the value of E increases. The smallness of the displacement $u_1$ in the radial direction means that a large inserting force is required when two tubular bodies are inserted. This invention, therefore, limits the ratio of the outside diameter of a thin tube and the inside diameter of a thick tube in the tubular body (the outside diameter of thin tube / the inside diameter of a thick tube = X) in a prescribed range and limits the storage elastic moduli of the tubular body (a) and the tubular body (b) mentioned above in respectively prescribed ranges as well. Incidentally, the fact that a large inserting force is required when X exceeds the prescribed range is evident from the foregoing formula (1).

Further, the haze value of the tubular body (a) is preferred to be not more than 40 %. If it is more than 40 %, it will possibly result in impairing transparency.

The tubular body (a) to be used in this invention is only required to assume a tubular shape possessing a through opening and enable the connected part at least with the tubular body (b) to manifest smoothness fit for the connection. The shape of the other part thereof is irrelevant and may be properly selected in conformity with the purpose of use. Thus, besides a lengthy article which possesses a fixed inside diameter and a fixed outside diameter throughout the entire length thereof, for example, the tubular body may possess different inside diameters and different outside diameters at the both ends thereof and the tubular body which possess fixed inside diameters and fixed outside diameters at the both ends thereof may have the intermediate part thereof possess an inside diameter and an outside diameter which differ from them at the both ends. These tubular bodies can be produced by the conventional method which is available for the production of a tubular article.

(2) Tubular body (b)

The polyolefin type resin to be used in the polyolefin-containing thermoplastic resin composition (B) may be the same as used in the aforementioned tubular body (a). In this case, the polyolefin type resins incorporated in the tubular body (a) and the tubular body (b) may be identical or not identical with each other.

The rate of content of polyolefin in the aforementioned polyolefin-containing thermoplastic resin composition (B) is preferably in the range of 20 - 100 % by weight, more preferably in the range of 40 - 100 % by weight, and particularly preferably in the range of 60 - 100 % by weight. If the rate of content is less than 20 % by weight, it will possibly result in lowering the inserting property by the stickiness peculiar to the material and deteriorating the stiffness and the impact resistance which are characteristic properties of polyolefin.

As concrete examples of the other resins which comprise the polyolefin-containing thermoplastic resin composition (B), the styrene type elastomer described in the paragraph dealing with the tubular body (a), polyolefin type elastomer, urethane type elastomer, or the like may be cited. The aforementioned other resin comprising the thermoplastic resin composition (B) is preferred to be a styrene type elastomer.

If necessary, the thermoplastic resin composition (B) can incorporate therein varying kinds of other additives within a range in which the characteristic properties thereof are not impaired. As concrete examples of the additives, for example, inorganic fillers, lubricants, various kinds of stabilizer, antiblocking agents, weather resistance enhancers, processing aids, or the like may be cited.

The storage elastic modulus of the aforementioned tubular body (b) is preferably in the range of $2 \times 10^7$ - $9 \times 10^8$ Pa and more preferably in the range of $10 \times 10^7$ - $9 \times 10^8$ Pa. If it is less than $2 \times 10^7$ Pa, it will possibly result in lowering the mold releasing property particularly in the case of injection molding. Conversely, if it is more than $9 \times 10^8$ Pa, it will possibly result in heightening the haze value and lowering the visibility because the degree of crystallinity is heightened. As a result, it proves to be disadvantageous. Further, the storage elastic modulus of the tubular body (b) is preferred to be higher than that of the tubular body (a). The reason for this preference is that the inserting property of tube during the course of assemblage is excellent and the material cost is low. Incidentally, the aforementioned characteristic property with respect to storage elastic modulus prefers the connected part at least with the tubular body (a) to fulfill the aforementioned conditions.

Further, the haze value of the tubular body (b) is preferably not more than 85 % and more preferably not more than 70 %. If it more than 85 %, it will possibly result in impairing transparency and rendering difficult visual recognition of the contents. Incidentally, since the contents such as air bubbles are preferred to allow recognition in the case of a use for foodstuff or medical treatment, the haze value is preferred to be low.

The tubular body (b) to be used in this invention is comprised of the aforementioned polyolefin-containing thermoplastic resin composition (B). It is only required to assume a tubular shape possessing a through opening and enable the connected part at least with the tubular body (a) to manifest smoothness fit for the connection. The shape of the other part thereof is irrelevant and can be properly selected in conformity with the purpose of use. Thus, besides a lengthy article which possesses a fixed inside diameter and a fixed outside diameter throughout the entire length thereof, for example, the tubular body may possess different inside diameters and different outside diameter at the both ends thereof and the tubular body which have fixed inside diameters and fixed outside diameters at the both ends thereof may have the intermediate part thereof possess an inside diameter and an outside diameter which differ from them at the both ends thereof.

The tubular body (b) can be produced by the conventional method. It may be shaped like a connector which serves to connect the tubular body (a), for example.

(c) Connection of tubular body (a) and tubular body (b)

The method for connecting the tubular body (a) and the tubular body (b) does not need to be particularly restricted. A method which consists in causing a thick tube having the terminal part thereof cut aslant to be inserted into a thin tube possessing a vertical terminal part or a method which consists in having a thin tube physically expanded briefly during the course of connecting tubular bodies and returning the thin tube to the original inside diameter after completion of the insertion may be adopted, for example.

(d) Absorbent

This invention necessitates the presence of absorbent having an absorption wavelength of 700 - 2,500 nm in the connected part of the tubular body (a) and the tubular body (b) on the tubular body (a) and/or the tubular body (b). In this case, the term "connected part" which means the site of the absorbent does not need to be restricted to the surface of contact of the tubular body (a) and the tubular body (b) but may embrace the inner side of a thin tube, the outer side of a thick tube or any of the component layers of the laminated body, when the tubular body (a) has a laminated structure. Even in the case of a monolayer structure, the connected part is allowed to contain the absorbent. The site of such presence of the absorbent is illustrated in Fig. 6. The statement "the step for incorporating" as used in this invention, therefore, refers to causing a layer destined to constitute the connected part of a laminated body to contain a dyestuff such as an absorbent or applying an absorbent to the surface of the connected part by some method or other.

As the absorbent having an absorption wavelength of 700 - 2, 500 nm and used in this invention, one or more members selected from the group consisting of dyestuffs such as phthalocyanine, cyanine, aminium, imonium, squalium, polymethine, and anthraquinone, black pigments such as carbon black, and coating materials for plastics. The absorbent using a dyestuff proves to be particularly suitable for applications prizing transparency. The amount of the absorbent to be used may be in the range which is observed by the conventional laser welding.

The absorbent added to a solvent, a polymer solution, or a coating material may be applied to either or both of the tubular body (a) and the tubular body (b) or the absorbent may be added in advance to the thermoplastic resin composition (A) or (B). As concrete examples of the method of application, a dipping method, a coating method using a brush, a spray coating method, an ink jet printing method fit for ink printer, a screen printing method, a pad printing method, and a method which consists in pasting a tape or a transfer film coated in advance with the absorbent may be cited.

As concrete examples of the solvent for dissolving the aforementioned absorbent, isopropanol, acetone, methanol, tetrahydrofuran, chloroform, cyclohexane, butyl acetate, xylene, toluene, or the like is preferable, and as articularly preferred examples, chloroform, cyclohexanone, or the like may be cited. The concentration of the absorbent is preferably in the range of 0.001 - 0.3 % by weight, more preferably in the range of 0.01 - 0.2 % by weight, and still more preferably in the range of 0.02 - 0.1 % by weight. If the concentration is less than 0.001 % by weight, it will result in insufficiency of the amount of heat generated during the course of the laser welding. If it is more than 0.3 % by weight, it will be at a disadvantage in unduly increasing the cost.

In the case of the pad printing, the width is preferably in the range of 1 - 50 mm, more preferably in the range of 2 - 20 mm, and still more preferably in the range of 3 - 7 mm. If the width is less than 1 mm, it will result in insufficiency of the strength of the welded part. If it is more than 50 mm, it will result in impairing the working property. When the tubular body manifests an inferior coating property evinced by the trend of repelling the solvent, it may be given a surface treatment such as corona treatment, plasma treatment, flame treatment, or acid treatment before it is subjected to the coating or pasting.

Incidentally, when the expected presence of the absorbent is attained with difficulty after the connection of the tubular body (a) and the tubular body (b), the absorbent is caused to exist in the prospective connected part before the tubular body (a) and the tubular body (b) are connected. When the absorbent is added in advance to the thermoplastic resin composition (A) or the thermoplastic resin composition (B) which is destined to form the tubular body (a) or the tubular body (b), the presence of the absorbent has been already accomplished before the connection of the tubular body (a) and the tubular body (b).

(e) Laser welding

As the laser to be used for the laser welding contemplated by this invention, near infrared ray lasers such as ordinary semiconductor layer (wavelength: 800 - 960 nm) and YAG laser (wavelength: 1096 nm) which easily permeate a transparent resin are preferably available. If the wave range exceeds the aforementioned level, it will possibly render difficult the necessary connection because the thermoplastic resin composition (A) and the polyolefin type resin absorb the laser. Particularly the semiconductor laser is at an advantage in being comparatively inexpensive, exhibiting high heat exchange efficiency as compared with a laser of other wavelength, and promoting decrease of power consumption. By adopting the laser welding, it is made possible to avoid elution of the adhesive agent from the adhered part and exalt the safety of the produced tubular body.

(f) Tubular article

The tubular article according to this invention is obtained by laser welding the tubular body (a) and the tubular body (b) mentioned above and is produced, by adopting tubular bodies optimum in conformity with the kind of application, into a varying kind of hollow molded article. As concrete examples of the hollow molded articles, toys, articles for daily use, food containers, sundry articles, light electrical appliances, utensils for medical treatment, automotive parts, and industrial parts, or the like may be cited. Among these molded articles, of the aforementioned hollow molded articles, those tubular articles necessitating transparency and requiring the connected parts thereof to possess high airtightness are used advantageously for foodstuffs, utensils for medical treatment, and transportation of fluid as well which invariably entail observation of their contents. The use of the method according to this invention for the production of such foodstuffs and utensils for medical treatment proves to be preferable from safety standpoint because the otherwise possible elusion of adhesive agent, or the like from the tubular bodies can be avoided.

Examples

Hereinafter, this invention will be described specifically by citing examples. These examples are not intended to restrict this invention in any way. Incidentally, various solid state properties and performances mentioned therein were determined, calculated, or evaluated as shown below.

Method of evaluation

(1) The content of a polystyrene polymer block was calculated from the ratio of the mass of styrene used relative to the total mass of all the monomers used for the production of a styrene type elastomer.
(2) As regards the number average molecular weights of the individual polymer blocks of a styrene type elastomer and the total styrene type elastomer, the number average molecular weights (Mn) of the polymer blocks and the number average molecular weight (Mn) of the total styrene type elastomer were determined by the GPC measurement against polystyrene.
(3) As regards the hydrogenated ratio to the styrene type elastomer, this hydrogenated ratio (%) was determined by measuring the iodine number of the styrene type elastomers before and after adding the hydrogenation respectively and subjecting the results' of the measurement to a prescribed calculation.
(4) The amount of vinyl bonds in the soft block polymer block of a styrene type elastomer was determined by giving a sample the NMR measurement and subjecting the resultant spectrum to a prescribed calculation.
(5) The storage elastic modulus of a thermoplastic resin composition was determined by the following method. First, a test piece (3 mm in width $\times$ 20 mm in length $\times$ 1 mm in thickness) was cut out of a sheet-like or a cylindrical molded body. The test piece was tested under the following conditions for the storage elastic modulus by using a tensile type dynamic viscoelasticity measuring instrument (made by Rheology Corp. and sold under the trademark designation "DVE-4: FT Rheospectrer").
Conditions of measurement

Measuring temperature: 25°C
Distance between chucks: 10 mm in diameter
Distortion factor: 0.03 %
Frequency: 1 Hz (sine wave)
Static loading: Automatic control of static loading

(6) The haze value was determined by the following method. In the case of a monolayer and a multilayer cylindrical molded body, a test piece (cylindrical, 50 mm in length) was cut out of the molded body and cut in a longitudinal direction, and then the curve of the test piece was reformed to a flat face. The obtained test piece was tested under the following conditions for the static load by using a totally automatic direct-reading haze computer (made by Suga Test Instruments Co., Ltd. and sold under the product code "HGM-2DP (for use with C light source) ") . Since the substrate B used in Example 1 - Example 3 and Comparative Example 2 was difficult to inflect, a molded body of the shape of a sheet (50 mm in length $\times$ 50 mm in width $\times$ 1 mm in thickness) was produced as a new test piece and used as a substitute.

Conditions of measurement

Measuring temperature: 25°C
Measuring area: 7 mm in diameter
Light source: Halogen lamp (12 V, 50 W)
Method for calculation of haze value:

[Mathematical formula 1]

Haze (%) = (Diffuse transmission factor (%)/total light transmission factor (%))× 100

Production Example 1: Production of styrene type elastomer

In a pressure-resistant reaction vessel dried and displaced with nitrogen, 4.2 kg of cyclohexane as a solvent, 87 ml of 1.3 mol/l of sec-butyl lithium solution in cyclohexane as a polymerization initiator, and 1.0 kg of styrene were added and the styrene was polymerized at 40°C. Thereafter, 0.08 kg of tetrahydrofuran was added as a Lewis base and then 8.0 kg of isoprene and 1.0 kg of styrene were successively polymerized to obtain a polystyrene-polyisoprene-polystyrene type block copolymer. The obtained block copolymer was hydrogenated for 10 hours in cyclohexane in the presence of Pd/C as a catalyst in a hydrogen atmosphere of 1.96 MPa to obtain a triblock copolymer comprised of polystyrene-polyisoprene-polystyrene (hereinafter referred to as "styrene type elastomer"). The obtained hydrogenated triblock copolymer was found to have a number average molecular weight of 110,000, a vinyl bond content of 55%, and a hydrogenation ratio of 80%.

Example 1

(1) By means of a tumbler, 85 % by weight of the styrene type elastomer obtained in Production Example 1 and 15 % by weight of polypropylene (random type polypropylene made by Sumitomo Mitsui Polyolefin Co. , Ltd. and sold under the product code "F327") were mixed. The resultant mixture was fed to a biaxial extruder (made by Krupp Werner & Pfleiderer and sold under the product code "ZSK-25") and kneaded therein at 200°C, then extruded in the shape of a strand, and shredded to produce thermoplastic polymer composition pellets.
The thermoplastic polymer composition pellets were fed to a monoaxial extruder 3 (made by Takayasu Iron Works Ltd. and sold under the product code "PFE-50") and extrusion molded through a circular type ring die at a preset temperature of 200°C to obtain a monolayer tubular body (substrates A and C) having an outside diameter of 6 mm and an inside diameter of 4 mm.

(2) A monolayer tubular body (substrate B) having an outside diameter of 7.5 mm and an inside diameter of 5.5 mm was obtained by following the procedure of (1) mentioned above while changing the mixing ratio of styrene type elastomer and polypropylene (styrene type elastomer : polypropylene) to 5 % by weight : 95 % by weight.

(3) The connected parts of a monolayer tube (substrate A) and a monolyer tube (substrate C) were dipped in a solution containing absorbent at a concentration of 0.06 % by weight in chloroform till they were coated with the absorbent. A cyanine type dye (made by Nippon Kayaku Co., Ltd. and sold under the trademark designation "KAYASORB CY-10") was deposited on the connected parts (refer to Fig. 2) and then caused to adhere thereto by exposure to a semiconductor laser (808 nm, output 100 W, irradiation speed 20 mm/sec) illustrated in Fig. 1. The laser beam generated with a laser generating device 5 was focused on a laser condenser lens 3 via an optical fiber as illustrated in Fig. 1. A substrate A1 and a substrate A2 were connected through the medium of an absorbent and then irradiated with a laser. The elastic moduli, haze values, and adhesive properties of the substrate A, substrate B, and substrate C are shown in Table 1. In the columns of adhesive property and inserting property of Table 1, o stands for good, × for bad, and - for incapable of evaluation.

Example 2

(1) Two monolayer tubular bodies (substrate A and substrate C) measuring 6 mm in outside diameter and 4 mm in inside diameter were obtained by following the procedure of (1) of Example 1 while changing the mixing ratio of styrene type elastomer and polypropylene (styrene type elastomer : polypropylene) to 50 % by weight : 50 % by weight.

(2) Amonolayer tubular body (substrate B) measuring 7.5 mm in outside diameter and 5.5 mm in inside diameter was obtained by following the procedure of (1) mentioned above while using only polypropylene as used in (1) mentioned above and changing the preset temperature of the monoaxial extruder 3 to 180°C.

(3) Two monolayer tubes (substrates A and C) and one monolayer tube (substrate B) were connected under the same conditions as used in (3) of Example 1 through the medium of an absorbent used in (3) of Example 1. The elastic moduli, haze values, and adhesive properties of the substrates A, B, and C are shown in Table 1.

Example 3

(1) Two monolayer tubular bodies (substrates A and C) each measuring 6 mm in outside diameter and 4 mm in inside diameter were obtained by following the procedure of (1) of Example 1 while changing the mixing ratio of a styrene type elastomer and polypropylene (styrene type elastomer : polypropylene) to 30 % by weight : 70 % by weight.

(2) Amonolayer tubular body (substrate B) measuring 7.5 mm in outside diameter and 5.5 mm in inside diameter was obtained by following the procedure of (1) mentioned above while using only polypropylene as used in (1) mentioned above and changing the preset temperature of the monoaxial extruder 3 to 180°C.

(3) Two monolayer tubes (substrates A and C) and one monolayer tube (substrate B) were connected under the same conditions as used in (3) of Example 1 through the medium of an absorbent used in (3) of Example 1. The elastic moduli, haze values, and adhesive properties of the substrates A, B, and C are shown in Table 1.

Example 4

(1) By means of a tumbler, 80 % by weight of the styrene type elastomer obtained in Production Example 1 and 20 % by weight of polypropylene (random type polypropylene made by SumitomoMitsui Polyolefin Co., Ltd. and sold under the product code "F327") were mixed. The resultant mixture was fed to a biaxial extruder (made by Krupp Werner & Pfleiderer and sold under the product code "ZSK-25") and kneaded therein at 200°C, then extruded in the shape of a strand, and shredded to produce thermoplastic polymer composition pellets (9-1).

Thermoplastic polymer pellets (9-2) were obtained by following the procedure mentioned above while changing the mixing ratio of a styrene type elastomer and polypropylene (styrene type elastomer : polypropylene) to 50 % by weight : 50 % by weight. Similarly, thermoplastic resin polymer pellets (9-3) were obtained by following the procedure mentioned above while changing the mixing ratio of a styrene type elastomer and polypropylene (styrene type elastomer : polypropylene) to 5 % by weight : 95 % by weight.

Two three-plymultilayer tubular bodies (substrates A and C) each measuring 6 mm in outside diameter and 4 mm in inside diameter were obtained by feeding thermoplastic polymer composition pellets (9-2) to a monoaxial extruder 1 (made by PlaEng Co., Ltd. and sold under the product code "PSV22"), thermoplastic polymer composition pellets (9-1) to a monoaxial extruder 2 (made by PlaEng KCo. , Ltd. and sold under the product code "PSV22"), and thermoplastic polymer composition pellets (9-3) to a monoaxial extruder 3 (made by TAKAYASU IRON WORKS LTD. and sold under the product code "PFE-50") and extrusion molding the pellets through a circular type ring die at a preset temperature of 200°C. The tubes were each comprised of an outer layer, an intermediate layer, and an inner layer respectively of thermoplastic polymer composition pellets (9-2), (9-1), and (9-3) in a thickness ratio of 0.04 : 99.2 : 0.04.

(2) A monolayer tube (substrate B) measuring 7.5 mm in outside diameter and 5.5 mm in inside diameter was obtained by following the procedure of (2) of Example 1 while using a styrene type elastomer and polypropylene at a mixing ratio of 5 % by weight : 95 % by weight (styrene type elastomer and polypropylene).

(3) Two three-ply multilayer tubes (substrates A and C) and one monolayer tube (substrate B) were allowed adhesion by mounting the same absorbent as used in (3) of Example 1 on the leading edges of the connected parts thereof (refer to Fig. 3) and irradiating the tubes with a semiconductor laser (808 nm, output 100 W, and irradiation speed 20 mm/sec). The elastic moduli, haze values, and adhesive properties of the substrates A and B and the substrate C are shown in Table 1.

Example 5

(1) A three-ply multilayer tubular body (substrate A) measuring 12 mm in outside diameter and 8 mm in inside diameter and a three-ply multilayer tubular body (substrate C) measuring 17 mm in outside diameter and 13.6 mm in inside diameter were obtained by following the procedure of (1) of Example 4 while using three kinds of thermoplastic polymer as thermoplastic polymer composition, i.e. a composition consisting of 50 % by weight of a styrene type elastomer and 50 % by weight of polypropylene, a composition consisting of 70 % by weight of a styrene type elastomer and 30 % by weight of polypropylene, and a polypropylene. The tubes were each comprised of an outer layer of the 50 % by weight : 50 % by weight composition of styrene type elastomer and polypropylene, an intermediate layer of the 70 % by weight : 30 % by weight composition of styrene type elastomer and polypropylene, and an inner layer solely of polypropylene in a thickness ratio of 0.025 : 0.95 : 0.025.

(2) A monolayer tube (substrate B) measuring 15 mm in outside diameter and 11 mm in inside diameter was obtained by following the procedure of (2) of Example 1 while using styrene type elastomer and polypropylene at a ratio of 5 % by weight : 95 % by weight.

(3) A three-ply multilayer tube (substrate A) and a three-ply multilayer tube (substrate C) were connected through the medium of a monolayer tube (substrate B). They were made to adhere by mounting the same absorbent as used in (3) of Example 1 at the leading terminals of the connected parts of the substrates A and B and the substrate C (Fig. 4) and irradiating the tubes with a semiconductor laser (808 nm, output 100 W, and radiation speed 20 mm/sec). The elastic moduli, haze values, and adhesive properties of the substrate A and the substrate B are shown in Table 1.

Example 6

(1) A three-ply multilayer tubular body (substrate A) measuring 12 mm in outside diameter and 8 mm in inside diameter and a three-ply multilayer tubular body (substrate C) measuring 17 mm in outside diameter and 13.6 mm in inside diameter were obtained by following the procedure of (1) of Example 4 while using three kinds of thermoplastic polymer as thermoplastic polymer composition, i.e. a composition consisting of 50 % by weight of a styrene type elastomer and 50 % by weight of polypropylene, a composition consisting of 70 % by weight of a styrene type elastomer and 30 % by weight of polypropylene, and a polypropylene.

The tubes were each comprised of an outer layer of the 50 % by weight : 50 % by weight composition of styrene type elastomer and polypropylene, an intermediate layer of the 70 % by weight : 30 % by weight composition of styrene type elastomer and polypropylene, and an inner layer solely of polypropylene in a thickness ratio of 0.025 : 0.95 : 0.025.

(2) A monolayer tubular body (substrate B) measuring 15 mm in outside diameter and 11 mm in inside diameter was obtained by following the procedure of (2) of Example 2 while using the monoaxial extruder 3 at a preset temperature of 180°C.

(3) A three-ply multilayer tube (substrate A) and a three-ply multilayer tube (substrate C) were connected through the medium of a monolayer tube (substrate B). They were made to adhere by mounting the same absorbent as used in (3) of Example 1 at the leading edges of the connected parts of the substrates A and B and the substrate C (refer to Fig. 4) and irradiating the tubes with a semiconductor laser (808 nm, output 100 W, and radiation speed 20 mm/sec). The elastic moduli, haze values, and adhesive properties of the substrate A and the substrate B are shown in Table 1

Example 7

(1) Two three-ply multilayer tubular bodies (substrates A and C) each measuring 12 mm in outside diameter and 8 mm in inside diameter were obtained by following the procedure of (1) of Example 6. The tubes were each comprised of an outer layer of the 50 % by weight : 50 % by weight composition of styrene type elastomer and polypropylene, an intermediate layer of the 70 % by weight : 30 % by weight composition of styrene type elastomer and polypropylene, and an inner layer solely of polypropylene in a thickness ratio of 0. 025 : 9.95 : 0.025.
A connector (substrate B) measuring 15 mm in outside diameter and 10 mm in inside diameter and furnished at the central inner part thereof with a convexed part was molded by feeding the same polypropylene as used in the foregoing (1) to an injection molder 3 (made by TKAYASU IRON WORKS LTD. and sold under the product code "PFE-50") under the condition of 230°C.
(2) The two three-ply multilayer tubular bodies (substrates A and C) and the connector (substrates B) were made to adhere by mounting the same absorbent as used in (3) of Example 1 at the connected parts of the substrates A and C and the substrate B (refer to Fig. 5) and irradiating them with a semiconductor laser (808 nm, output 100 W, and radiation speed 20 mm/sec). The elastic moduli, haze values, and adhesive properties of the substrate A and the substrate B are shown in Table 1.

Example 8

(1) Two three-ply multilayer tubular bodies (substrates A and C) each measuring 12 mm in outside diameter and 8 mm in inside diameter were obtained by following the procedure of Example 7. The tubes were each comprised of an outer layer of the 50 % by weight : 50 % by weight composition of styrene type elastomer and polypropylene, an intermediate layer of the 70 % by weight : 30 % by weight composition of styrene type elastomer and polypropylene, and an inner layer solely of polypropylene in a thickness ratio of 0.025 : 9.95 : 0.025. A connector (substrate B) measuring 15 mm in outside diameter and 11 mm in inside diameter and provided in the central inner part thereof with a convexed part was molded by following the procedure of (1) of Example 7.
(2) The two three-ply multilayer tubular bodies (substrates A and C) and the connector (substrate B) were made to adhere by mounting an absorbent comprised of acryl type black coating material (made by Teikoku Printing Inks Mfg. Co., Ltd. and sold under the product code "PPE-911 Black") (refer to Fig. 5) on the connected parts of the substrate A and the substrate B (refer to Fig. 5) and then irradiating them with a semiconductor laser (808 nm, output 100 W, and irradiation speed 20 mm/sec). The elastic moduli, haze values, and adhesive properties of the substrate A and the substrate B are shown in Table 1.

Example 9

(1) Two three-ply multilayer tubular bodies (substrates A and C) each measuring 12 mm in outside diameter and 8 mm in inside diameter were obtained by following the procedure of Example 7. The tubes were each comprised of an outer layer of the 50 % by weight : 50 % by weight composition of styrene type elastomer and polypropylene, an intermediate layer of the 70 % by weight : 30 % by weight composition of styrene type elastomer and polypropylene, and an inner layer solely of polypropylene in a thickness ratio of 0.025 : 9.95 : 0. 025.
A monolayer tubular body (substrate B) measuring 15 mm in outside diameter and 11 mm in inside diameter was obtained by following the procedure of (1) of Example 1 while changing the mixing ratio to styrene type elastomer of 40 % by weight and that of polypropylene of 60 % by weight.
(2) The two three-ply multilayer tubular bodies (substrates A and C) and the connector (substrate B) were made to adhere by mounting the same absorbent as used in (3) of Example 1 on the connected parts of the substrate A and the substrate B (refer to Fig. 5) and then irradiating them with a semiconductor laser (808 nm, output 100 W, and radiation speed 20 mm/sec). The elastic moduli, haze values, and adhesion properties of the substrate A and the substrate B are shown in Table 1.

Comparative Example 1

(1) A monolayer tubular body (substrate A) measuring 3 mm in outside diameter and 1 mm in inside diameter and a monolayer tubular body (substrate B) measuring 2.7 mm in inside diameter and 4.7 mm in outside diameter were obtained by following the procedure of (1) of Example 1 while using polypropylene in the place of the composition of styrene type elastomer and polypropylene.
(2) Themonolayertube (substrate A) and the monolayer tube (substrate B) could not be made to adhere because of difficult insertion in spite of mounting the same absorbent as used in (3) of Example 1 on the connected parts thereof (refer to Fig.2). The elastic substrates, haze values, and adhesion properties of the substrate A and the substrate B are shown in Table 1.

Comparative Example 2

(1) Substrates A, B, and C were produced by following the procedure of Example 5 while changing the outside diameter of the substrate B to 13.6 mm and the inside diameter thereof to 9.6 mm and the outside diameter of the substrate C to 14.8 mm and the inside diameter thereof to 10.8 mm.
(2) The three-ply multilayer tube (substrate A) and the three-ply multilayer tube (substrate C) were connected through the medium of a monolayer tube (substrate B). They could not be made to adhere because of difficult insertion in spite of mounting the same absorbent as used in (3) of Example 1 on the leading edges of the connected parts of the substrates A and B and the substrate C in the connected parts (refer to Fig. 4). The elastic moduli, haze values, and adhesion properties of the substrate A and the substrate B are shown in Table 1.

[Table 1]

| | | | | Example 1 | Example 2 | Example 3 | Example 4 | Example 5 | Example 6 | Example 7 | Example 8 | Example 9 | Comparative example 1 | Comparative example 2 |
|---|---|---|---|---|---|---|---|---|---|---|---|---|---|---|
| | | Ratio of components of composition | | | | | | | | | | | | |
| Substrate A | First layer | Styrene type elastomer | | 85 | 50 | 30 | 50 | 50 | 50 | 50 | 50 | 50 | 0 | 50 |
| | | polypropylene | | 15 | 50 | 70 | 50 | 50 | 50 | 50 | 50 | 50 | 100 | 50 |
| | Second layer | Styrene type elastomer | | - | - | - | 80 | 70 | 70 | 70 | 70 | 70 | - | 70 |
| | | polypropylene | | - | - | - | 20 | 30 | 30 | 30 | 30 | 30 | - | 30 |
| | Third layer | Styrene type elastomer | | - | - | - | 5 | 0 | 0 | 0 | 0 | 0 | - | 0 |
| | | polypropylene | | - | - | - | 95 | 100 | 100 | 100 | 100 | 100 | - | 100 |
| | Tube diameter (mm) | Inside diameter | | 4 | 4 | 4 | 4 | 8 | 8 | 8 | 8 | 8 | 1 | 8 |
| | | Outside diameter | | 6 | 6 | 6 | 6 | 12 | 12 | 12 | 12 | 12 | 3 | 12 |
| Substrate B | First layer | Styrene type elastomer | | 5 | 0 | 0 | 5 | 5 | 0 | 0 | 0 | 40 | 0 | 5 |
| | | polypropylene | | 95 | 100 | 100 | 95 | 95 | 100 | 100 | 100 | 60 | 100 | 95 |
| | Second layer | Styrene type elastomer | | - | - | - | - | - | - | - | - | - | - | - |
| | | polypropylene | | - | - | - | - | - | - | - | - | - | - | - |
| | Third layer | Styrene type elastomor | | - | - | - | - | - | - | - | - | - | - | - |
| | | polypropylene | | - | - | - | - | - | - | - | - | - | - | - |
| | Tube diameter (mm) | Inside diameter | | 5.5 | 5.5 | 5.5 | 5.5 | 11 | 11 | 10 | 11 | 11 | 27 | 9.6 |
| | | Outside diameter | | 7.5 | 7.5 | 7.5 | 7.5 | 15 | 15 | 15 | 15 | 15 | 4.7 | 13.6 |

(continued)

| | | Example 1 | Example 2 | Example 3 | Example 4 | Example 5 | Example 6 | Example 7 | Example 8 | Example 9 | Comparative example 1 | Comparative example 2 |
|---|---|---|---|---|---|---|---|---|---|---|---|---|
| Ratio of components of composition | First layer — Styrene type elastomer-polypropylene | 85 / 15 | 50 / 50 | 30 / 70 | 50 / 50 | 50 / 50 | 50 / 50 | 50 / 50 | 50 / 50 | 50 / 50 | 0 / 100 | 50 / 50 |
| | Second layer Styrene type elastomer-polypropylene | - / - | - / - | - / - | 80 / 20 | 70 / 30 | 70 / 30 | 70 / 30 | 70 / 30 | 70 / 30 | - / - | 70 / 30 |
| Substrate C | Third layer Styrene type elastomer-polypropylene | - / - | - / - | - / - | 5 / 95 | 0 / 100 | 0 / 100 | 0 / 100 | 0 / 100 | 0 / 100 | - / - | 0 / 100 |
| Tube diameter (mm) | Inside diameter | 4 | 4 | 4 | 4 | 13.6 | 13.6 | 8 | 8 | 8 | 1 | 10.8 |
| | Outside diameter | 6 | 6 | 6 | 6 | 17 | 17 | 12 | 12 | 12 | 3 | 14.8 |
| Substrate A | Elastic modulus (Pa) Haze (%) | 1.0E+07 3.5 | 1.2E+08 17 | 3.3E+08 40 | 1.1E+07 10 | 1.9E+07 23 | 1.9E+07 23 | 1.9E-07 23 | 1.9E+07 23 | 1.9E+07 23 | 9.0E+08 65 | 1.9E+07 23 |
| Substrate B | Elastic modulus (Pa) Haze (%) | 8.0E+08 62 | 9.0E+08 65 | 9.0E+08 65 | 8.0E+08 62 | 8.0E+08 62 | 9.0E+08 65 | 9.0E+08 65 | 8.0E+08 62 | 7.0E+07 35 | 9.0E+08 65 | 8.0E+08 62 |
| Substrate C | Elastic modulus (Pa) Haze (%) | 1.0E+07 3.5 | 1.2E+08 17 | 3.3E+08 40 | 1.1E+07 10 | 1.9E+07 23 | 1.9E+07 23 | 1.9E+07 23 | 1.9E+07 23 | 1.9E+07 23 | 9.0E+08 65 | 1.9E+07 23 |
| Adhesive property | | ○ | ○ | ○ | ○ | ○ | ○ | ○ | ○ | ○ | - | - |
| Inserting property | | ○ | ○ | ○ | ○ | ○ | ○ | ○ | ○ | ○ | × | × |
| Figure | | Fig. 2 | Fig. 2 | Fig. 2 | Fig. 3 | Fig. 4 | Fig.4 | Fig. 5 | Fig. 5 | Fig. 5 | Fig. 2 | Fig.4 |
| Outside diameter of thin tube/inside diameter of thick tube | Between A-B | 1.09 | 1.09 | 1.09 | 1.09 | 1.09 | 1.09 | 1.20 | 1.09 | 1.09 | 1.11 | 1.25 |
| | Between C-B | 1.09 | 1.09 | 1.09 | 1.09 | 1.10 | 1.10 | 1.20 | 1.09 | 1.09 | 1.11 | 1.26 |

Industrial Applicability

The method according to this invention for the production of a tubular article enables a tubular body (a) and a tubular body (b) to be tightly connected strongly and avoids impairing the transparency of the tubular article as well and, therefore, proves to be particularly suitable for such uses as are intended to transport a fluid such as a use for monitoring the contamination with impurities by visual observation or by means of a testing device such as a laser, a use necessitating observation because the contamination of the fluid with air bubbles poses a problem, and a use in a molded article (tube) whose interior contamination poses a problem.

**Claims**

1.    A method for the production of a tubular article resulting from joining by insertion a tubular body (a) possessed of a layer comprised of a thermoplastic resin composition (A) containing a styrene type elastomer and a polyolefin type resin and a tubular body (b) comprised of a thermoplastic resin composition (B) containing a polyolefin, **characterised by** comprising
a step of interposing an absorbent having an absorption wavelength of 700 - 2, 500 nm on the tubular body (a) and/or the tubular body (b) in the connected part of the tubular body (a) and the tubular body (b) so related as to have a ratio of the outside diameter of a thin tube and the inside diameter of a thick tube (outside diameter of thin tube/inside diameter of thick tube = X) in the range of 1 < X < 1.25,
a step of connecting the tubular body (a) and the tubular body (b) by mutual insertion, and
a step of causing the connected part to adhere by irradiation with a laser beam, wherein
the storage elastic modulus of the tubular body (a) is in the range of $1.0 \times 10^7$ - $6.7 \times 10^8$ Pa, the storage elastic modulus of the tubular body (b) is in the range of $2 \times 10^7$ - $9 \times 10^8$ Pa, and the storage elastic modulus of the tubular body (b) is higher than that of the tubular body (a); wherein the content of the styrene type elastomer in the thermoplastic resin composition (A) containing the styrene type elastomer and the polyolefin type resin is in the range of 5 - 85 % by weight.

2.    A method for the production of a tubular article according to claim 1, wherein the tubular body (a) is a laminated body of not less than two layers and the composition of the connected part thereof adhering to the tubular body (b) is comprised of a thermoplastic resin composition (A) containing a styrene type elastomer and a polyolefin type resin.

3.    A method for the production of a tubular article according to claim 1, wherein the haze value of the tubular body (a) is not more than 40 % and the haze value of the tubular body (b) is not more than 85 %.

4.    A method for the production of a tubular article according to claim 1, wherein the rate of content of the polyolefin in the thermoplastic resin composition (B) containing the polyolefin is in the range of 20 - 100 % by weight.

5.    A method for the production of a tubular article according to claim 1, wherein the styrene type elastomer is comprised of an aromatic vinyl polymer block and a conjugated diene type polymer block.

6.    A method for the production of a tubular article according to claim 5, wherein the aromatic vinyl polymer block is comprised of polystyrene or poly-$\alpha$-methyl styrene and the conjugated diene type polymer block is comprised of polyisoprene, an isoprene/butadiene copolymer, polybutadiene, or the hydrogenated product thereof.

7.    A method for the production of a tubular article according to claim 5, wherein the conjugated diene type polymer block is any of the following members (1) - (3):

(1) the polyisoprene having contents of 1,2-bond unit and 3,4-bond unit both in the range of 10 - 75 mol % and having hydrogenated not less than 70 % of a carbon-carbon double bonds,
(2) the isoprene-butadiene copolymer containing isoprene and butadiene at a ratio in the of range of 5/95 - 95/5 (mass ratio), having contents of 1,2-bond unit and 3,4-bond unit both in the range of 20 -85 mol %, and having hydrogenated not less than 70 % of a carbon-carbon double bonds, and
(3) the polybutadiene having a content of 1,2-bond unit of not less than 45 mol % and having hydrogenated not less than 70 % of a carbon-carbon double bond.

8.    A method for the production of a tubular article according to claim 1, wherein the polyolefin type resin comprising the tubular body (a) and/or the tubular body (b) contains polypropylene resin and/or polyethylene resin.

9. A method for the production of a tubular article according to claim 1, wherein the absorbent is one or more members selected from the group consisting of phthalocyanine, cyanine, aminium, imonium, squalium, polymethine, anthraquinone, carbon black, and coating materials for plastics.

**Patentansprüche**

1. Verfahren zur Herstellung eines röhrenförmigen Artikels, der beim Verbinden durch Einführen eines röhrenförmigen Körpers (a) mit einer Schicht aus einer thermoplastischen Harzzusammensetzung (A), die ein styrolartiges Elastomer und ein polyolefinartiges Harz enthält, und eines röhrenförmigen Körpers (b) bestehend aus einer ein Polyolefin enthaltenden thermoplastischen Harzzusammensetzung (B) entsteht, **dadurch gekennzeichnet, dass** das Verfahren folgende Schritte umfasst:

   Dazwischenfügen eines Absorptionsmittels mit einer Absorptionswellenlänge von 700 - 2.500 nm am röhrenförmigen Körper (a) und/oder am röhrenförmigen Körper (b) in dem Verbundstück aus dem röhrenförmigen Körper (a) und dem röhrenförmigen Körper (b) derart, dass ein Verhältnis des Außendurchmessers einer dünnen Röhre und des Innendurchmessers einer dicken Röhre (Außendurchmesser der dünnen Röhre/Innendurchmesser der dicken Röhre = X) im Bereich von 1 < X < 1,25 ist,
   Verbinden des röhrenförmigen Körpers (a) und des röhrenförmigen Körpers (b) durch beidseitiges Einführen, und
   Verursachen durch Bestrahlung mit einem Laserstrahl, dass das Verbundstück haftet, wobei
   das Speicher-Elastizitätsmodul des röhrenförmigen Körpers (a) im Bereich von 1,0 x $10^7$-6,7 x $10^8$ Pa liegt, das Speicher-Elastizitätsmodul des röhrenförmigen Körpers (b) im Bereich von 2 x $10^7$-9 x $10^8$ Pa liegt, und das Speicher-Elastizitätsmodul des röhrenförmigen Körpers (b) größer ist als das des röhrenförmigen Körpers (a); wobei der Gehalt des styrolartigen Elastomers in der thermoplastischen Harzzusammensetzung (A), die das styrolartige Elastomer und das polyolefinartige Harz enthält, im Bereich von 5-85 Gew.-% liegt.

2. Verfahren zur Herstellung eines röhrenförmigen Artikels nach Anspruch 1, wobei der röhrenförmige Körper (a) ein laminierter Körper von nicht weniger als zwei Schichten ist und die Zusammensetzung des Verbundstücks davon, die an dem röhrenförmigen Körper (b) haftet, besteht aus einer thermoplastischen Harzzusammensetzung (A), die ein styrolartiges Elastomer und ein polyolefinartiges Harz enthält.

3. Verfahren zur Herstellung eines röhrenförmigen Artikels nach Anspruch 1, wobei der Haze-Wert des röhrenförmigen Körpers (a) nicht mehr als 40% und der Haze-Wert des röhrenförmigen Körpers (b) nicht mehr als 85% beträgt.

4. Verfahren zur Herstellung eines röhrenförmigen Artikels nach Anspruch 1, wobei der Polyolefingehalt in der thermoplastischen Harzzusammensetzung (B), die das Polyolefin enthält, im Bereich von 20-100 Gew.-% liegt.

5. Verfahren zur Herstellung eines röhrenförmigen Artikels nach Anspruch 1, wobei das styrolartige Elastomer aus einem aromatischen Vinylpolymerblock und einem konjugierten dienartigen Polymerblock besteht.

6. Verfahren zur Herstellung eines röhrenförmigen Artikels nach Anspruch 5, wobei der aromatische Vinylpolymerblock aus Polystyrol oder Poly-$\alpha$-Methylstyrol besteht, und der konjugierte dienartige Polymerblock aus Polyisopren, einem Isopren-/Butadiencopolymer, Polybutadien oder dem hydrierten Produkt davon besteht.

7. Verfahren zur Herstellung eines röhrenförmigen Artikels nach Anspruch 5, wobei der konjugierte, dienartige Polymerblock eins der folgenden Elemente (1)-(3) ist:

   (1) das Polyisopren mit einem Gehalt von 1,2-Bindungseinheiten und 3,4-Bindungseinheiten jeweils im Bereich von 10-75 Mol-% und mit hydrierten Produkten von nicht weniger als 70% einer Kohlenstoff-Kohlenstoff-Doppelbindung,
   (2) das Isopren-Butadien-Copolymer, das Isopren und Butadien im Verhältnis im Bereich von 5/95-95/5 (Massenverhältnis) enthält, mit einem Gehalt von 1,2-Bindungseinheiten und 3,4-Bindungseinheiten jeweils im Bereich von 20-85 Mol-% und mit hydrierten Produkten von nicht weniger als 70% einer Kohlenstoff-Kohlenstoff-Doppelbindung, und
   (3) das Polybutadien mit einem Gehalt von 1,2-Bindungseinheiten von nicht weniger als 45 Mol-% und hydrierten Produkten von nicht weniger als 70% einer Kohlenstoff-Kohlenstoff-Doppelbindung.

8. Verfahren zur Herstellung eines röhrenförmigen Artikels nach Anspruch 1, wobei das polyolefinartige Harz, das den röhrenförmigen Körper (a) und/oder den röhrenförmigen Körper (b) umfasst, Polypropylenharz und/oder Polyethylenharz enthält.

9. Verfahren zur Herstellung eines röhrenförmigen Artikels nach Anspruch 1, wobei das Absorptionsmittel ein oder mehrere Elemente ausgewählt aus der Gruppe bestehend aus Phthalocyanin, Cyanin, Aminium, Imonium, Squalium, Polymethin, Anthraquinon, Carbon Black und Beschichtungsmaterialien für Kunststoffe ist.

**Revendications**

1. Procédé pour la production d'un article tubulaire résultant de la jonction par insertion d'un corps tubulaire (a) possédant une couche composée d'une composition de résine thermoplastique (A) contenant un élastomère de type styrène et une résine de type polyoléfine et un corps tubulaire (b) composé d'une composition de résine thermoplastique (B) contenant une polyoléfine, **caractérisé en ce qu'**il comprend
une étape de l'interposition d'un absorbant possédant une longueur d'onde d'absorption de 700 à 2 500 nm sur le corps tubulaire (a) et/ou le corps tubulaire (b) dans la partie raccordée du corps tubulaire (a) et du corps tubulaire (b) mis en relation afin de présenter un rapport du diamètre extérieur d'un tube mince et du diamètre intérieur d'un tube épais (diamètre extérieur de tube mince/diamètre intérieur de tube épais = X) dans la plage de 1 < X < 1,25,
une étape du raccordement du corps tubulaire (a) et du corps tubulaire (b) par insertion mutuelle, et
une étape de l'entraînement de l'adhérence de la partie raccordée par irradiation avec un faisceau laser, dans lequel le module d'élasticité de stockage du corps tubulaire (a) est dans la plage de $1{,}0 \times 10^7$ à $6{,}7 \times 10^8$ Pa, le module d'élasticité de stockage du corps tubulaire (b) est dans la plage de $2 \times 10^7$ à $9 \times 10^8$ Pa, et le module d'élasticité de stockage du corps tubulaire (b) est supérieur à celui du corps tubulaire (a) ;
dans lequel la teneur en élastomère de type styrène dans la composition de résine thermoplastique (A) contenant l'élastomère de type styrène et la résine de type polyoléfine est dans la plage de 5 à 85% en poids.

2. Procédé pour la production d'un article tubulaire selon la revendication 1, dans lequel le corps tubulaire (a) est un corps stratifié de non moins de deux couches et la composition de la partie raccordée de celui-ci adhérant au corps tubulaire (b) est composée d'une composition de résine thermoplastique (A) contenant un élastomère de type styrène et une résine de type polyoléfine.

3. Procédé pour la production d'un article tubulaire selon la revendication 1, dans lequel la valeur de trouble du corps tubulaire (a) n'est pas supérieure à 40% et la valeur de trouble du corps tubulaire (b) n'est pas supérieure à 85%.

4. Procédé pour la production d'un article tubulaire selon la revendication 1, dans lequel le taux de teneur en polyoléfine dans la composition de résine thermoplastique (B) contenant la polyoléfine est dans la plage de 20 à 100% en poids.

5. Procédé pour la production d'un article tubulaire selon la revendication 1, dans lequel l'élastomère de type styrène est composé d'un bloc polymère vinylique aromatique et d'un bloc polymère de type diène conjugué.

6. Procédé pour la production d'un article tubulaire selon la revendication 5, dans lequel le bloc polymère vinylique aromatique est composé de polystyrène ou styrène poly-$\alpha$-méthylique et le bloc polymère de type diène conjugué est composé de polyisoprène, d'un copolymère isoprène/butadiène, de polybutadiène, ou du produit hydrogéné de celui-ci.

7. Procédé pour la production d'un article tubulaire selon la revendication 5, dans lequel le bloc polymère de type diène conjugué est un quelconque des éléments suivants (1) à (3) :

   (1) le polyisoprène possédant des teneurs en unité de liaison 1,2 et unité de liaison 3,4 toutes les deux dans la plage de 10 à 75% en mole et n'ayant pas hydrogéné moins de 70% des doubles liaisons carbone-carbone,
   (2) le copolymère isoprène-butadiène contenant isoprène et butadiène à un rapport dans la plage de 5/95 à 95/5 (rapport de masse), possédant des teneurs en unité de liaison 1,2 et unité de liaison 3,4 toutes les deux dans la plage de 20 à 85% en mole, et n'ayant pas hydrogéné moins de 70% des doubles liaisons carbone-carbone, et
   (3) le polybutadiène possédant une teneur en unité de liaison 1,2 non inférieure à 45% en mole et n'ayant pas hydrogéné moins de 70% des doubles liaisons carbone-carbone.

8. Procédé pour la production d'un article tubulaire selon la revendication 1, dans lequel la résine de type polyoléfine comprenant le corps tubulaire (a) et/ou le corps tubulaire (b) contient de la résine de polypropylène et/ou résine de polyéthylène.

9. Procédé pour la production d'un article tubulaire selon la revendication 1, dans lequel l'absorbant est un ou plusieurs éléments sélectionnés parmi le groupe constitué de phtalocyanine, de cyanine, d'aminium, d'imonium, de squalium, de polyméthine, d'anthraquinone, de noir de carbone, et de matériaux de revêtement pour plastique.

# FIG.1

# FIG.2

# FIG.3

# FIG.4

# FIG.5

# FIG.6

**EP 1 698 446 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001071384 A
- JP 2003181931 A
- JP 2002526261 T
- US 20030138582 A